# EUROPÄISCHE PATENTANMELDUNG

(11) **EP 4 722 678 A1**
(43) Veröffentlichungstag der Anmeldung: **08.04.2026**
(21) Anmeldenummer: 24204262.0
(22) Anmeldetag: 02.10.2024
(51) Int. Cl.: G01M 11/06

(54) **KAMERAGESTÜTZTE KONFIGURATION EINES SCHWEINWERFER-EINSTELL-PRÜFGERÄTES**

(71) Anmelder: Hella Gutmann Solutions GmbH, 79241 Ihringen (DE)
(72) Erfinder: Aring, Carsten, 59557 Lippstadt (DE); Becker, Thomas, 79235 Vogtsburg (DE)
(74) Vertreter: Pfenning, Meinig & Partner mbB

(57) **Zusammenfassung**

Es wird ein Verfahren zum Konfigurieren eines Scheinwerfer-Einstell-Prüfgerätes (10), SEP, vorgeschlagen, das Verfahrend umfassend: Erzeugen, mittels einer Kamera (30), einer Echtzeitabbildung (210) einer Ist-Lichtverteilung eines Scheinwerfers (2) eines Fahrzeugs (1); Bereitstellen einer Vielzahl von Zielabbildungen (220), wobei jede Zielabbildung (220) eine Soll-Lichtverteilung umfasst und jeder Zielabbildung (220) ein Scheinwerfer-Einstell-Prüfalgorithmus aus einer Vielzahl von Scheinwerfer-Einstell-Prüfalgorithmen zugeordnet ist; Anzeigen der Echtzeitabbildung (210) mittels einer Anzeigevorrichtung (40; 140); Anzeigen, mittels der Anzeigevorrichtung (40; 140), wenigstens einer Zielabbildung (220) der Vielzahl von Zielabbildungen (220); Empfangen eines Einstellbefehls eines ausgewählten Scheinwerfer-Einstell-Prüfalgorithmus der Vielzahl von Scheinwerfer-Einstell-Prüfalgorithmen für das SEP auf Grundlage einer ausgewählten Zielabbildung (220) der Vielzahl von Zielabbildungen (220).

## Beschreibung

Die vorliegende Erfindung betrifft ein Verfahren zum Konfigurieren eines Scheinwerfer-Einstell-Prüfgerätes, SEP, ein Verfahren zum Einstellen und/oder Prüfen eines Scheinwerfers eines Fahrzeugs mithilfe eines SEP, ein SEP und ein SEP-System, und schließlich ein Computerprogramm zum Durchführen des jeweiligen Verfahrens sowie ein computerlesbares Medium auf dem das Programm gespeichert ist.

Moderne Fahrzeugscheinwerfersysteme, insbesondere AFS (Advanced Frontlight System) Scheinwerfer, zeichnen sich durch eine Vielzahl an die Umgebung des Fahrzeugs angepasste und zum Teil dynamisch anpassbare Lichteinstellungen aus. So kann das Frontscheinwerfersystem eines einzigen Fahrzeugs bis zu sieben und mehr unterschiedliche Lichteinstellungen umfassen, wie z. B. symmetrisches und asymmetrisches Abblendlicht, Fernlicht, Kurvenlicht, Stadtlicht, Autobahnlicht, Standlicht, Schlechtwetterlicht etc. Diese werden typischerweise durch LED-, Matrix-LED und/oder Laser-Scheinwerfersysteme bereitgestellt und zeichnen sich durch charakteristische vom Fahrzeugscheinwerfer erzeugte Lichtverteilungen aus, die die Fahrbahn auf unterschiedliche Weise ausleuchten können. Entsprechend steigen auch die Anforderungen an die Kalibrierung bzw. Justage solcher Systeme, die typischerweise mit einem SEP erfolgen kann. Dazu wird das SEP zunächst in einer vorbestimmten vom Hersteller vorgegebenen Position zum zu kalibrierenden Scheinwerfer positioniert und anschließend die Kalibrierung entsprechend den Herstellerangaben durchgeführt. Ein beispielhaftes SEP ist in der EP-Anmeldung mit der Anmeldenummer 23 213 106.0 beschrieben.

Ein SEP umfasst ein Kamera- und Linsensystem zur Erfassung einer von dem Scheinwerfer erzeugten momentanen Lichtverteilung, einer Ist-Lichtverteilung, die dann mit einer z. B. im SEP hinterlegten vorgegebenen korrekten Soll-Lichtverteilung abgeglichen und entsprechend kalibriert werden kann. Für die Kalibrierung selbst muss das SEP daher neben der korrekten Positionierung zum Scheinwerfer auch korrekt konfiguriert werden und zwar dahingehend, dass für die Kalibrierung der korrekte, d.h. zum Scheinwerfer und seiner zu konfigurierenden Lichtverteilung zugehörige, Schweinwerfer-Einstell-Prüfalgorithmus, kurz SEP-Algorithmus, eingestellt wird, der die Prüf- und Einstellgrößen sowie Befehle zur Durchführung der Kalibrierung umfasst. Für die korrekte Kalibrierung eines Scheinwerfers mittels eines SEP ist es somit wesentlich den korrekten SEP-Algorithmus einzustellen, wobei dieser nicht nur von dem zu kalibrierenden Lichtsystem, sondern auch von der am Fahrzeug eingestellten zu kalibrierenden Lichtverteilung abhängig ist. Die Einstellung des SEP-Algorithmus erfolgt typischerweise ohne Rückgriff auf die tatsächliche vom Scheinwerfer erzeugte Ist-Lichtverteilung durch Wahl aus einer einfachen im SEP hinterlegten Liste, die lediglich verschiedene Fahrzeugmarken, Fahrzeugmodelle und zugehörige Lichtverteilungen anführt, und ist damit regelmäßig anfällig für eine Falschauswahl, insbesondere eine zu einem späteren Zeitpunkt nicht mehr nachvollziehbare Falschauswahl, was letztlich eine fehlerhafte Kalibrierung verursachen und damit die Verkehrssicherheit des Fahrzeugs gefährden kann.

Vor diesem Hintergrund liegt der vorliegenden Erfindung die Aufgabe zugrunde, eine alternative und/oder verbesserte Lösung für die Konfiguration eines SEP bereitzustellen. Die Verbesserung kann dabei insbesondere darin liegen, dass das Risiko einer Falschauswahl des SEP-Algorithmus minimiert und/oder die korrekte Auswahl vereinfacht wird.

Erfindungsgemäß wird diese Aufgabe durch ein Verfahren zum Konfigurieren eines SEP, ein Verfahren zum Einstellen und/oder Prüfen eines Scheinwerfers eines Fahrzeugs mithilfe eines SEP, ein SEP und ein SEP-System, sowie ein Computerprogramm zum Durchführen des jeweiligen Verfahrens sowie ein computerlesbares Medium auf dem das Programm gespeichert ist mit den Merkmalen der entsprechenden unabhängigen Ansprüche gelöst. Mögliche Ausgestaltungen und Weiterentwicklungen ergeben sich aus den Unteransprüchen, der nachfolgenden Beschreibung und den Figuren.

Das vorgeschlagene Verfahren zum Konfigurieren eines SEP umfasst:
Erzeugen, mittels einer Kamera, einer Echtzeitabbildung einer Ist-Lichtverteilung eines Scheinwerfers eines Fahrzeugs;
Bereitstellen einer Vielzahl von Zielabbildungen, wobei jede Zielabbildung eine Soll-Lichtverteilung umfasst und jeder Zielabbildung ein Scheinwerfer-Einstell-Prüfalgorithmus aus einer Vielzahl von Scheinwerfer-Einstell-Prüfalgorithmen zugeordnet ist;
Anzeigen der Echtzeitabbildung mittels einer Anzeigevorrichtung;
Anzeigen, mittels der Anzeigevorrichtung, wenigstens einer Zielabbildung der Vielzahl von Zielabbildungen;
Empfangen eines Einstellbefehls eines ausgewählten Scheinwerfer-Einstell-Prüfalgorithmus der Vielzahl von Scheinwerfer-Einstell-Prüfalgorithmen für das SEP auf Grundlage einer ausgewählten Zielabbildung der Vielzahl von Zielabbildungen.

Dadurch, dass für die Konfiguration des SEP der SEP-Algorithmus auf Grundlage einer ausgewählten Zielabbildung der Vielzahl von Zielabbildungen und unter Rückgriff auf die Echtzeitabbildung eingestellt wird, kann das Risiko einer Falschauswahl des SEP-Algorithmus minimiert werden. Außerdem können zusätzliche Arbeitsschritte wie z. B. ein zusätzlicher Gang zum Fahrzeug und Überprüfung der am Fahrzeug eingestellten Lichteinstellung entfallen.

Der Einstellbefehl kann durch einen Nutzer erfolgen. Der Nutzer kann dafür durch die bereitgestellten und angezeigten Zielabbildungen sowie deren Abgleich mit der angezeigten Echtzeitabbildung bei der richtigen Auswahl des SEP-Algorithmus unterstützt und/oder geführt werden. Alternativ oder zusätzlich kann die Auswahl des SEP-Algorithmus auf Grundlage eines Abgleichs der Echtzeitabbildung und der Vielzahl von Zielabbildungen mittels einer ML-Klassifikation (ML für maschinelles Lernen) geführt und/oder gestützt werden. Es kann vorgesehen sein, dass der eingestellte SEP-Algorithmus und zumindest die Echtzeitabbildung, optional ergänzt durch die Vielzahl der Zielabbildungen, auf deren Grundlage die Einstellung des SEP-Algorithmus erfolgt ist, automatisch protokolliert werden. Dadurch kann das Verfahren nachträglich nachvollziehbar gemacht werden, z. B. zum Zwecke einer Service-Dokumentation einer erfolgten Scheinwerfer-Kalibrierung.

Eine Lichtverteilung zeichnet sich grundsätzlich dadurch aus, dass sie eine charakteristische, beispielsweise an bestimmte Umgebungsbedingungen angepasste, Ausleuchtung einer Fahrbahn bereitstellt. Mithin ist jede Abbildung, beispielsweise die mittels der Kamera erfasste Echtzeitabbildung und/oder die bereitgestellten Zielabbildungen, für die jeweilige Ist-Lichtverteilung und/oder Soll-Lichtverteilung charakteristisch. Dies kann sich auf die Geometrie der Lichtverteilung, insbesondere auf die Form des abgebildeten Lichtkegels, die Lage seiner vertikale(n) und/oder horizontale(n) Hell-Dunkel-Grenze(n) - also der Übergang zwischen ausgeleuchtetem und nicht ausgeleuchtetem Bereich - das Vorhandensein zusätzlicher Beleuchtungsspots, und/oder die Intensität der Lichtverteilung, insbesondere einen Blendwert und/oder eine Beleuchtungsstärke der Lichtverteilung, beziehen. Eine Lichtverteilung als solche wird in der einschlägigen Fachsprache gelegentlich auch als Referenzelement bezeichnet. Dies sollte nicht mit dem nachstehend verwendeten Begriff eines Referenzsegments verwechselt werden, der vorliegend ein charakteristisches Merkmal einer Lichtverteilung bezeichnen soll. Entsprechende Beispiele für mögliche Referenzsegmente werden weiter unten aufgeführt.

Das Verfahren kann ferner ein Anzeigen eines oder mehrerer Lichtverteilungs-Soll-Referenzsegmente in wenigstens einer oder jeder Zielabbildung der Vielzahl von Zielabbildungen umfassen, wobei jedes Lichtverteilungs-Soll-Referenzsegment einer Lichtverteilungscharakteristik entspricht. Es kann vorgesehen sein, dass das/die Lichtverteilungs-Soll-Referenzsegment(e) von einer Datenbank oder einem Speicher angefordert und erhalten wird/werden. Alternativ oder zusätzlich kann das Verfahren ein Erzeugen und Anzeigen eines oder mehrerer Lichtverteilungs-Ist-Referenzsegmente in der Echtzeitabbildung umfassen, wobei jedes Lichtverteilungs-Ist-Referenzsegment einer Lichtverteilungscharakteristik entspricht. Jede dieser Maßnahmen kann die Komplexität einer Lichtverteilung reduzieren und/oder eine für die Lichteinstellung maßgebliche Kenngröße einer Lichtverteilung hervorheben. Die Lichtverteilungscharakteristik kann eine Hell-Dunkel-Grenze, insbesondere eine vertikale Hell-Dunkel-Grenze, oder charakteristische Form der Lichtverteilung, ein Lichtschwerpunkt, ein vorgegebener Bildpunkt und dergleichen sein. Diese sind regelmäßig für die Geometrie der Lichtverteilung besonders maßgebliche Charakteristiken. Das Erzeugen ausgewählter Lichtverteilungscharakteristiken in der Echtzeitabbildung kann anhand einfacher bildverarbeitender Methoden, wie z. B. eine Kontrastanalyse erfolgen. Zusätzlich kann auch eine Gegenüberstellung einer oder mehrerer gleicher Lichtverteilungscharakteristiken von Zielabbildung und Echtzeitabbildung erfolgen. So können z. B. die jeweiligen vertikalen Hell-Dunkel-Grenzen einer Echtzeitabbildung und einer oder mehrere Zielabbildungen der Vielzahl von Zielabbildungen angezeigt und einander gegenübergestellt werden.

Jede Zielabbildung der Vielzahl von Zielabbildungen kann einer unterschiedlichen Lichteinstellung aus einer Vielzahl von Lichteinstellungen des Scheinwerfers entsprechen. Die Anzahl und Art der Lichteinstellungen kann insbesondere Scheinwerfersystemspezifisch sein, also von der Fahrzeugmarke und dem Fahrzeugmodell abhängig sein. Die Lichteinstellungen können in einer nicht abschließenden Liste symmetrisches und asymmetrisches Abblendlicht, Fernlicht, Standlicht, Nebellicht, Kurvenlicht, Schlechtwetterlicht, Autobahnlicht, Stadtlicht und/oder Diagnoselicht umfassen. Diagnoselicht kann dabei einer vom Hersteller speziell für die Diagnose und/oder Kalibrierung vorbestimmten charakteristischen Lichtverteilung entsprechen. Insbesondere kann das Diagnoselicht für Fahrzeugscheinwerfersysteme mit adaptiver Lichtsteuerung zur Verfügung gestellt werden. Bei diesen Systemen wird die Lichtverteilung der Scheinwerfer automatisch an Verschiedenen Umgebungsverhältnisse angepasst. So kann das Verfahren auch ein Senden eines Diagnoselichtbefehls an das Fahrzeug zum Erzeugen eines Diagnoselichts als Ist-Lichtverteilung des Scheinwerfers umfassen.

Jeder Zielabbildung können charakteristische Sollinformationen zugeordnet sein und das Verfahren kann ein selektives Anzeigen der Sollinformationen umfassen. Die Sollinformationen können die Komplexität einer Lichtverteilung weiter reduzieren und/oder eine für die Lichteinstellung maßgebliche Kenngröße einer Lichtverteilung hervorheben. Es kann vorgesehen sein, dass die Sollinformationen von einer Datenbank oder einem Speicher angefordert und erhalten werden. Die Sollinformationen können Informationen zur Soll-Lichtverteilung, insbesondere Geometrie, Blendwert und/oder Beleuchtungsstärke der Soll-Lichtverteilung umfassen. Die Sollinformationen können Informationen zu dem der Zielabbildung zugeordneten Lichtverteilungs-Algorithmus, insbesondere in Abhängigkeit von Fahrzeugdaten, Scheinwerferdaten und/oder Scheinwerfer-Lichteinstellung, umfassen.

Das Verfahren kann ferner ein Erzeugen und Anzeigen von Prüfinformationen für die Echtzeitabbildung umfassen. Die Prüfinformationen können die Komplexität einer Lichtverteilung weiter reduzieren und/oder eine für die Lichteinstellung maßgebliche Kenngröße einer Lichtverteilung hervorheben. Die Prüfinformationen können Informationen zur Ist-Lichtverteilung, insbesondere seiner Geometrie, Blendwert und/oder Beleuchtungsstärke, umfassen. Auch die Prüfinformationen können anhand bildverarbeitender Methoden, wie z. B. einer Kontrastanalyse oder Lichtstärkenmessung erzeugt werden.

Es wird auch ein Verfahren zum Einstellen und/oder Prüfen eines Scheinwerfers eines Fahrzeugs mithilfe eines Scheinwerfer-Einstell-Prüfgerätes, SEP, vorgeschlagen. Das Verfahren umfasst die Merkmale des oben beschriebenen Verfahrens zum Konfigurieren des SEP und zusätzlich ein Einstellen und/oder Prüfen des Scheinwerfers gemäß dem ausgewählten Scheinwerfer-Einstell-Prüfalgorithmus. Mit anderen Worten wird nach Einstellung des SEP-Algorithmus auf Grundlage einer ausgewählten Zielabbildung die bestimmungsgemäße Kalibrierung des Scheinwerfers, insbesondere mittels des eingestellten SEP-Algorithmus durchgeführt. Dies kann umfassen, dass die Ist-Lichtverteilung auf die ausgewählte Soll-Lichtverteilung kalibriert, also dieser angepasst wird.

Schließlich werden auch ein Computerprogramm und ein computerlesbares Medium vorgeschlagen, auf dem das Computerprogramm gespeichert ist. Das Computerprogramm umfasst Befehle, die bewirken, dass das SEP oder das SEP-System eines der erfindungsgemäßen Verfahren ausführt. Das Programm kann auf dem SEP oder dem SEP-System bereitgestellt sein.

Vorliegend wurden mehrere Ausführungsformen offenbart. Aus der folgenden detaillierten Beschreibung, die eine beispielhafte Ausführungsformen der Erfindung zeigt und beschreibt, werden der Fachperson noch weitere Ausführungsformen der vorliegenden Erfindung ersichtlich. Dementsprechend sind die Zeichnungen und die detaillierte Beschreibung als beispielhaft und nicht einschränkend zu betrachten. Wiederkehrende Merkmale sind in der Figurenbeschreibung mit denselben Bezugszeichen versehen.

Es zeigen
- Fig. 1: eine schematische Darstellung einer Ausführungsform eines SEP,
- Fig. 2: eine schematische Darstellung einer Ausführungsform eines SEP-Systems vor einem Fahrzeug,
- Fig. 3: eine schematische Darstellung einer Anzeige von Echtzeitabbildung und Zielabbildung,
- Fig. 4: eine weitere schematische Darstellung der Anzeige aus Fig. 3 und
- Fig. 5 bis 8: jeweils eine beispielhafte Lichtverteilung unterschiedlicher Lichteinstellungen.

Im Folgenden werden wiederkehrende Merkmale einmalig für alle Figuren beschrieben. Auf einzelnen Figuren wird nur dann verwiesen, wenn es zweckmäßig ist.

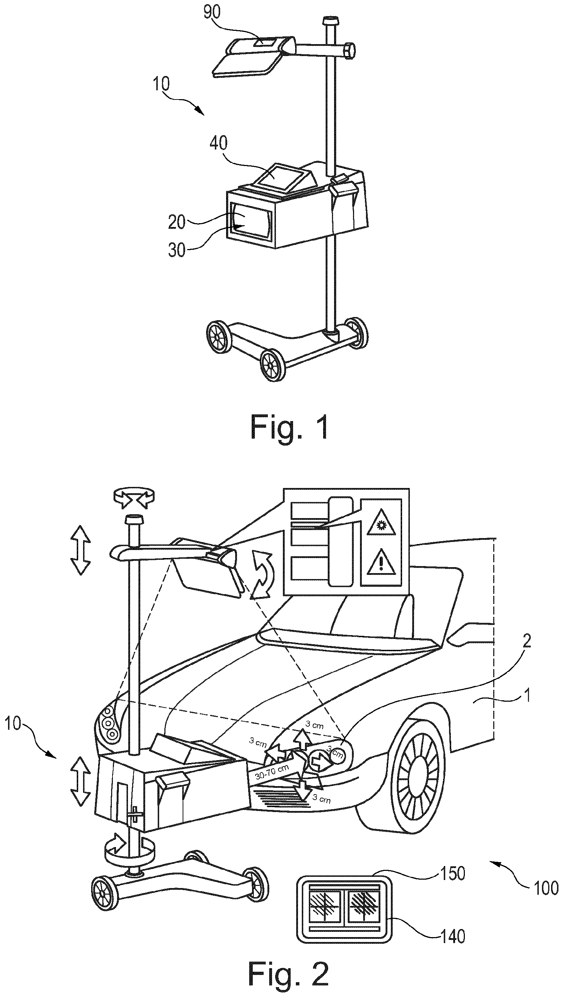

Fig. 1 zeigt ein SEP 10 mit einer integrierten Anzeigevorrichtung 40. Fig. 2 zeigt ein SEP-System 100, das neben dem SEP 10 ein mobiles Endgerät 150 mit einer Anzeigevorrichtung 140 umfasst. Das mobile Endgerät 150 mit der Anzeigevorrichtung 140 kann alternativ oder zusätzlich zu der im SEP 10 integrierten Anzeigevorrichtung 40 vorgesehen und z. B. ein Smartphone oder ein Tablet sein. Das SEP 10 umfasst eine Kamera 30, die hinter einer Eingangslinse 20, hier eine Fresnellinse, angeordnet ist. Das SEP 10 ist eingerichtet, bei seiner bestimmungsgemäßen Ausrichtung zu einem Scheinwerfer 2 eines Fahrzeugs 1 mittels der Kamera 30 vom Scheinwerfer 2 emittiertes Licht einer Ist-Lichtverteilung zu Erfassen und eine Echtzeitabbildung 210 der Ist-Lichtverteilung zu erzeugen. Die Kamera 30 ist vorliegend eine CMOS-Kamera. Weiterhin umfasst das SEP 10 eine Ausrichtvorrichtung 90, hier ein Linienlaser, zum bestimmungsgemäßen Ausrichten des SEP 10 gegenüber einem zu kalibrierenden Scheinwerfer 2. Weitere Details zum SEP 10 und seiner Ausrichtung können beispielsweise der EP-Anmeldung mit der Anmeldenummer 23 213 106.0 entnommen werden. Der Scheinwerfer 2 kann ein Abblend-, Fern-, Nebel- oder Zusatzscheinwerfer sein. Der Scheinwerfer 2 kann ein DE-, FF- LED- oder Xenonscheinwerfer sein. Sowohl das SEP 10 als auch das SEP-System 100 sind konfiguriert, das im folgenden dargelegte Verfahren durchzuführen. Dabei umfassen das SEP 10 und/oder das mobile Endgerät 150 eine Steuervorrichtung, die konfiguriert ist, ein Computerprogramm auszuführen, das Befehle umfasst, die bewirken, dass das SEP 10 und/oder das SEP-System 100 das Verfahren ausführt und/oder umsetzt. Das Computerprogramm kann beispielsweise von einem computerlesbaren Medium bereitgestellt werden.

Zunächst wird das SEP 10 für die durchzuführende Scheinwerferkalibrierung bestimmungsgemäß relativ zu einem Scheinwerfer 2 eines Fahrzeugs 1 ausgerichtet, und zwar so, dass das SEP 10 die von dem Scheinwerfer 2 erzeugte Ist-Lichtverteilung erfassen und auf dessen Grundlage eine Echtzeitabbildung 210 der Ist-Lichtverteilung erzeugen kann. Diese Ausrichtung kann einen vorbestimmten Abstand, eine vorbestimmte Höhe und/oder eine vorbestimmte Orientierung des SEP 10 relativ zu kalibrierenden Scheinwerfer 2 umfassen. Anschließend kann die Konfiguration des SEP 10 erfolgen, die vorliegend in der Einstellung des für die Kalibrierung bestimmungsgemäßen oder korrekten SEP-Algorithmus liegt. Der korrekte SEP-Algorithmus hängt dabei von dem Scheinwerfersystem und der gewählten Lichteinstellung aus beispielsweise einer Vielzahl von Lichteinstellungen ab, über die das Scheinwerfersystem verfügt. Jede Lichteinstellung erzeugt dabei eine vorbestimmte Ist-Lichtverteilung des Scheinwerfers, so z. B. symmetrisches und asymmetrisches Abblendlicht, Fernlicht, Standlicht, Nebellicht, Kurvenlicht, Schlechtwetterlicht, Autobahnlicht, Stadtlicht und/oder Diagnoselicht. Das Scheinwerfersystem ist typischerweise einer bestimmten Fahrzeugmarke und einem bestimmten Fahrzeugmodell zugeordnet.

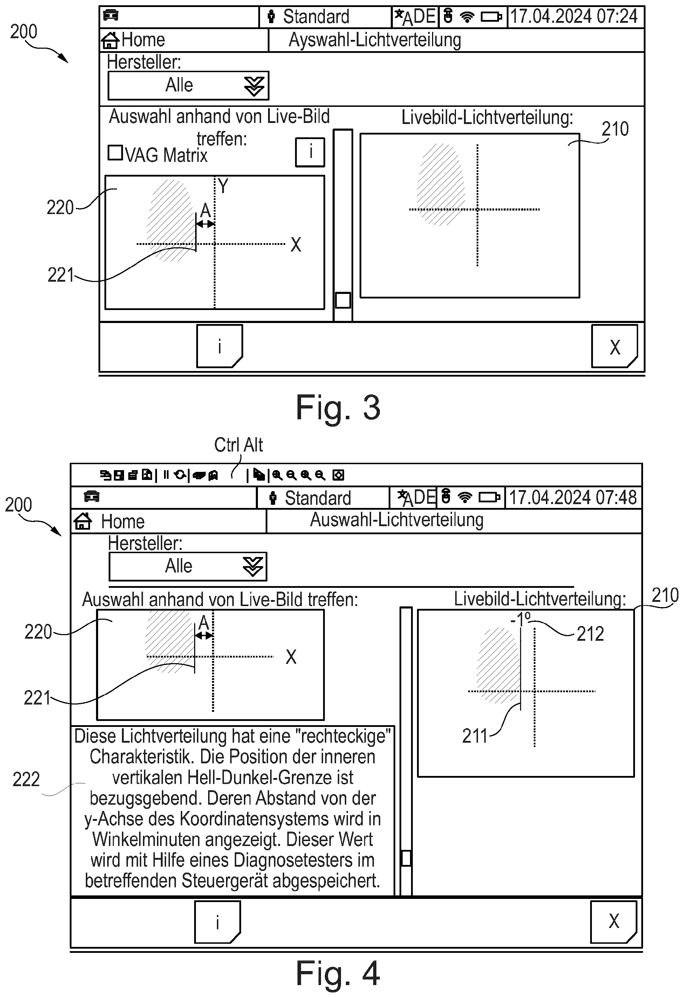

Das Konfigurieren des SEP umfasst ein Erzeugen, mittels der Kamera 30, einer Echtzeitabbildung 210 der Ist-Lichtverteilung des Scheinwerfers 2 des Fahrzeugs 1; ein Bereitstellen einer Vielzahl von Zielabbildungen 220, wobei jede Zielabbildung 220 eine Soll-Lichtverteilung umfasst und jeder Zielabbildung 220 ein Scheinwerfer-Einstell-Prüfalgorithmus aus einer Vielzahl von Scheinwerfer-Einstell-Prüfalgorithmen zugeordnet ist; ein Anzeigen, auf einer Anzeige 200, der Echtzeitabbildung 210, vgl. Fig. 3 und 4 rechts, und wenigstens einer Zielabbildung 220 der Vielzahl von Zielabbildungen 220, vgl. Fig. 3 und 4 links, mittels der im SEP 10 integrierten Anzeigevorrichtung 40 und/oder der Anzeigevorrichtung 140 des Endgeräts 150; und schließlich ein Empfangen eines Einstellbefehls eines ausgewählten Scheinwerfer-Einstell-Prüfalgorithmus der Vielzahl von Scheinwerfer-Einstell-Prüfalgorithmen für das SEP 10 auf Grundlage einer ausgewählten Zielabbildung 220 der Vielzahl von Zielabbildungen 220.

Der Einstellbefehl erfolgt vorliegend durch einen Nutzer, wobei der Nutzer durch die bereitgestellten und angezeigten Zielabbildungen 220 sowie deren Abgleich mit der angezeigten Echtzeitabbildung 210 bei der richtigen Auswahl des SEP-Algorithmus unterstützt und/oder geführt wird. Alternativ oder zusätzlich kann die Auswahl des SEP-Algorithmus auf Grundlage eines Abgleichs der Echtzeitabbildung 210 und der Vielzahl von Zielabbildungen 220 mittels einer ML-Klassifikation geführt und/oder gestützt werden. Es kann vorgesehen sein, dass der eingestellte SEP-Algorithmus und zumindest die Echtzeitabbildung 210, optional ergänzt durch die Vielzahl der Zielabbildungen 220, auf deren Grundlage die Einstellung des SEP-Algorithmus erfolgt ist, automatisch protokolliert werden.

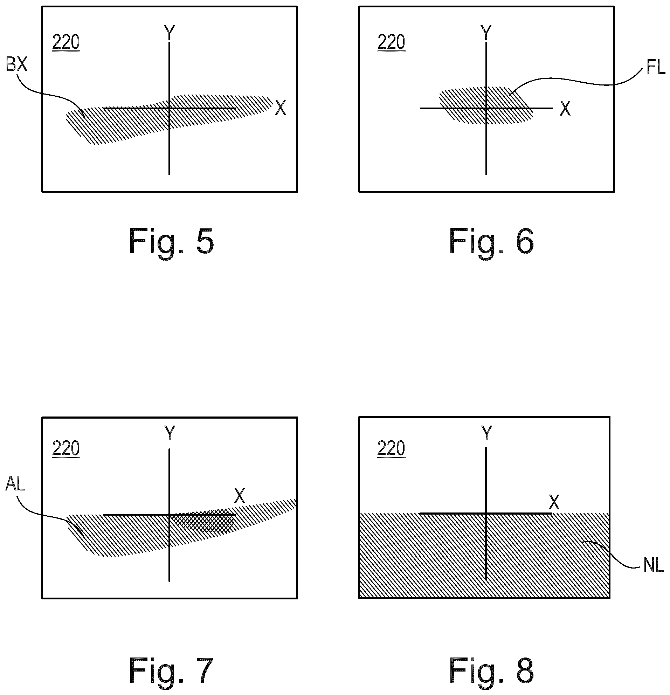

Wie vorstehend erläutert, entspricht jede Zielabbildung 220 der Vielzahl von Zielabbildungen 220 einer unterschiedlichen Lichteinstellung aus einer Vielzahl von Lichteinstellungen des Scheinwerfers 2. Die Anzahl und Art der Lichteinstellungen ist Scheinwerfersystemspezifisch, kann also von der Fahrzeugmarke und dem Fahrzeugmodell abhängig sein. Es kann also in einer hier zunächst nicht näher gezeigten Vorkonfiguration des SEP 10 vorgesehen sein, dass die Anzahl der möglichen SEP-Algorithmen durch eine Vorauswahl des betreffenden Scheinwerfersystems - z. B. aus einer Liste von Fahrzeugmarken und Fahrzeugmodellen - entsprechend den von dem Scheinwerfer 2 erzeugbaren Lichtverteilungen reduziert wird. Die Lichteinstellungen können dabei in einer nicht abschließenden und Scheinwerfersystem-abhängigen Liste symmetrisches und asymmetrisches Abblendlicht, Fernlicht, Standlicht, Nebellicht, Kurvenlicht, Schlechtwetterlicht, Autobahnlicht, Stadtlicht und/oder Diagnoselicht umfassen. Diagnoselicht kann dabei einer vom Hersteller speziell für die Diagnose und/oder Kalibrierung vorbestimmten charakteristischen Lichtverteilung entsprechen. Solch eine Lichtverteilung ist in den Fig. 3 und 4 für blendfreies Fernlicht dargestellt und kann z. B. durch ein Senden eines Diagnoselichtbefehls an das Fahrzeug 1 zum Erzeugen des Diagnoselichts als Ist-Lichtverteilung des Scheinwerfers 2 bereitgestellt werden. Alternative Lichtverteilungen, vorliegend mögliche Soll-Lichtverteilungen, können den Fig. 5 bis 8 entnommen werden. Diese umfassen asymmetrisches Abblendlicht BX eines Bi-Xenon-Scheinwerfers in Fig. 5, Fernlicht FL in Fig. 6, asymmetrisches Abblendlicht mit einem Lichtspot AL in Fig. 7 und Nebellicht NL in Fig. 8. Aus dieser Darstellung wird deutlich, dass jede Lichtverteilung und die daraus erzeugte Zielabbildung 220 eine ganz charakteristische Geometrie aufweist. Die Achsen x und y bilden dabei die horizontale bzw. die vertikale Bezugsachse oder Mittenachse der jeweiligen Abbildung.

Ferner wird in der jeweiligen in Fig. 3 und 4 gezeigten Zielabbildung 220 ein Lichtverteilungs-Soll-Referenzsegment 221 angezeigt, wobei das Lichtverteilungs-Soll-Referenzsegment 221 einer Lichtverteilungscharakteristik entspricht. Das Lichtverteilungs-Soll-Referenzsegment 221 kann von einer Datenbank oder einem Speicher angefordert und erhalten werden. Zusätzlich wird in der in Fig. 4 gezeigten Echtzeitabbildung 210 ein Lichtverteilungs-Ist-Referenzsegment 211 erzeugt und angezeigt, wobei das Lichtverteilungs-Ist-Referenzsegment 211 einer Lichtverteilungscharakteristik entspricht. Die Lichtverteilungscharakteristik ist vorliegend eine vertikale Hell-Dunkel-Grenze, kann aber auch eine charakteristische Form der Lichtverteilung (hier z. B. ein die gezeigte Lichtverteilung charakteristisches Rechteck), ein Lichtschwerpunkt, ein vorgegebener Bildpunkt und dergleichen sein. Mithin werden vorliegend die jeweiligen vertikalen Hell-Dunkel-Grenzen der Echtzeitabbildung 210 und der gezeigten Zielabbildung 220 der Vielzahl von Zielabbildungen angezeigt und einander gegenübergestellt. Das Erzeugen ausgewählter Lichtverteilungscharakteristiken in der Echtzeitabbildung 210 kann anhand einfacher bildverarbeitender Methoden, wie z. B. eine Kontrastanalyse erfolgen.

Gemäß Fig. 4 können der Zielabbildung 220 charakteristische Sollinformationen 222 zugeordnet und selektiv angezeigt werden. Diese können von einer Datenbank oder einem Speicher angefordert und erhalten werden. Die Sollinformationen 222 können Informationen zur Soll-Lichtverteilung, insbesondere Geometrie (z. B. wie vorliegend als "rechteckige Charakteristik" gekennzeichnet und mit dem zusätzlichen Bezug zur inneren vertikalen Hell-Dunkel-Grenze versehen), Blendwert und/oder Beleuchtungsstärke der Soll-Lichtverteilung umfassen. Die Sollinformationen 222 können aber auch Informationen zu dem der Zielabbildung 220 zugeordneten Lichtverteilungs-Algorithmus, insbesondere in Abhängigkeit von Fahrzeugdaten, Scheinwerferdaten und/oder Scheinwerfer-Lichteinstellung, umfassen. Zusätzlich werde in der Echtzeitabbildung 210 Prüfinformationen 212 erzeugt und angezeigt. Die Prüfinformationen 212 können Informationen zur Ist-Lichtverteilung, insbesondere seiner Geometrie, Blendwert und/oder Beleuchtungsstärke, umfassen. Vorliegend wird der Abstand der inneren Hell-Dunkel-Grenze der momentanen Ist-Sollverteilung zur vertikalen Bezugsachse y in Winkelminuten angezeigt. Auch die Prüfinformationen 212 können anhand bildverarbeitender Methoden, wie z. B. einer Kontrastanalyse oder Lichtstärkenmessung erzeugt werden.

Nach erfolgter Einstellung des SEP-Algorithmus auf Grundlage einer ausgewählten Zielabbildung 220 kann die bestimmungsgemäße Kalibrierung des Scheinwerfers 2 mittels des eingestellten SEP-Algorithmus durchgeführt werden, also ein Einstellen und/oder Prüfen des Scheinwerfers 2 gemäß dem ausgewählten Scheinwerfer-Einstell-Prüfalgorithmus erfolgen. Dabei kann die Ist-Lichtverteilung auf die ausgewählte Soll-Lichtverteilung kalibriert, also dieser angepasst werden.

Eine weitere Ausführungsform des Verfahrens zum Konfigurieren des SEP 10 oder SEP-Systems 100 kann den folgenden Ablauf umfassen. Zunächst werden Soll-Vorgaben ausgewählt. Dazu werden beispielsweise auf der Anzeigevorrichtung 40; 140 in einem Menü Vorgaben zur Kalibrierung bzw. Einstellung der jeweiligen Lichtverteilungen vorgenommen (nicht dargestellt). Diese können sich z. B. auf die Prüfnorm, die Fahrzeugart des Fahrzeugs 1, eine Vorneigung des Scheinwerfers 2, die Verkehrsrichtung oder das Vorhandensein einer adaptiven Lichtsteuerung beziehen. Anschließend kann wahlweise ein Auswahlassistent bereitgestellt werden. Ist z. B. ein Bediener oder Nutzer sich nicht sicher, welche Art von Lichtverteilung zu erwarten ist oder ausgewählt werden muss, besteht über eine Schaltfläche die Möglichkeit, sich alle im SEP 10 oder SEP-System 100 (ggf. Fahrzeug- und/oder Scheinwerfersystemspezifisch) zur Verfügung stehen Soll-Lichtverteilungen, bspw. einer Fernlichtassistenz-Funktion für blendfreies Fernlicht, anzeigen zu lassen. Dies führt den Bediener zu der in den Fig. 3 und 4 dargestellten Anzeige 200 eines Menüs zur Auswahl der Lichtverteilung. Auf der rechten Seite der Anzeige 200 wird dann die Echtzeitabbildung 210 angezeigt, also das Livebild der Lichtverteilung, die von dem Scheinwerfer 2 in das SEP abgestrahlt und von der Kamera 30 aufgenommen wird. Auf der linken Seite der Anzeige 200 sind alle Lichtverteilungen, bspw. der markenspezifischen Fernlicht-Assistenz-Systeme (blendfreies Fernlicht), aufgeführt. Über das Auswahlfeld "Hersteller" kann eine Selektierung nach Fahrzeugmarke vorgenommen werden. Dann werden nur die Lichtverteilungen dieser Fahrzeugmarke angezeigt. Vorliegend kann sich der Bediener durch eine Scroll-Funktion alle im SEP 10 oder SEP-System 100 hinterlegten Zielabbildungen 220 anschauen und mit der Echtzeitabbildung 210 vergleichen. Rechts, neben der Überschrift befindet sich eine Schaltfläche "i". Bei Betätigung der Schaltfläche wird diese aktiv und es werden unterhalb der Grafik zusätzliche, relevante Sollinformationen 222 zur Zielabbildung 220 und der damit verbundenen Lichtverteilung, zum entsprechenden Algorithmus und/oder zur entsprechenden Einstellung des Scheinwerfers 2 eingeblendet. Bei nochmaliger Betätigung der Schaltfläche, wird dieser wieder inaktiv und die Informationen werden ausgeblendet. Durch den Vergleich zwischen Zielabbildung 220 und Echtzeitabbildung 210 sowie den textlichen Sollinformationen 222 kann der Bediener den korrekten Algorithmus auswählen. Jede Zielabbildung 220 besitzt eine Überschrift mit dem jeweiligen Namen der angezeigten Lichtverteilung. Links vom Namen ist eine Check Box aufgeführt, bei deren Betätigung der entsprechende Algorithmus ausgewählt wird.

Weitere Ausführungsformen der beschriebenen Erfindung ergeben sich für die Fachperson in naheliegender Weise.

## Patentansprüche

1. Verfahren zum Konfigurieren eines Scheinwerfer-Einstell-Prüfgerätes (10), SEP, das Verfahren umfassend:
Erzeugen, mittels einer Kamera (30), einer Echtzeitabbildung (210) einer Ist-Lichtverteilung eines Scheinwerfers (2) eines Fahrzeugs (1);
Bereitstellen einer Vielzahl von Zielabbildungen (220), wobei jede Zielabbildung (220) eine Soll-Lichtverteilung umfasst und jeder Zielabbildung (220) ein Scheinwerfer-Einstell-Prüfalgorithmus aus einer Vielzahl von Scheinwerfer-Einstell-Prüfalgorithmen zugeordnet ist;
Anzeigen der Echtzeitabbildung (210) mittels einer Anzeigevorrichtung (40; 140);
Anzeigen, mittels der Anzeigevorrichtung (40; 140), wenigstens einer Zielabbildung (220) der Vielzahl von Zielabbildungen (220);
Empfangen eines Einstellbefehls eines ausgewählten Scheinwerfer-Einstell-Prüfalgorithmus der Vielzahl von Scheinwerfer-Einstell-Prüfalgorithmen für das SEP auf Grundlage einer ausgewählten Zielabbildung (220) der Vielzahl von Zielabbildungen (220).

2. Verfahren nach Anspruch 1, ferner umfassend ein Anzeigen eines oder mehrerer Lichtverteilungs-Soll-Referenzsegmente (221) in wenigstens einer oder jeder Zielabbildung (220) der Vielzahl von Zielabbildungen (220), wobei jedes Lichtverteilungs-Soll-Referenzsegment (221) einer Lichtverteilungscharakteristik entspricht.

3. Verfahren nach Anspruch 1 oder 2, ferner umfassend ein Erzeugen und Anzeigen eines oder mehrerer Lichtverteilungs-Ist-Referenzsegmente (211) in der Echtzeitabbildung (210), wobei jedes Lichtverteilungs-Ist-Referenzsegment (211) einer Lichtverteilungscharakteristik entspricht.

4. Verfahren nach Anspruch 2 oder 3, wobei die Lichtverteilungscharakteristik eine Hell-Dunkel-Grenze, insbesondere eine innere vertikale Hell-Dunkel-Grenze, oder eine charakteristische Form der Lichtverteilung ist.

5. Verfahren nach einem der vorangehenden Ansprüche, wobei jede Zielabbildung (220) der Vielzahl von Zielabbildungen (220) einer unterschiedlichen Lichteinstellung aus einer Vielzahl von Lichteinstellungen des Scheinwerfers (2) entspricht, wobei die Lichteinstellungen optional Abblend-, Fern-, Stand-, Nebel-, Kurven-, Schlechtwetter-, Autobahn-, Stadt- und/oder Diagnoselicht umfassen.

6. Verfahren nach einem der vorangehenden Ansprüche, wobei jeder Zielabbildung (220) charakteristische Sollinformationen (222) zugeordnet sind, und wobei das Verfahren ein selektives Anzeigen der Sollinformationen (222) umfasst.

7. Verfahren nach Anspruch 6, wobei die Sollinformationen (222) Informationen zur Soll-Lichtverteilung, insbesondere Geometrie, Blendwert und/oder Beleuchtungsstärke der Soll-Lichtverteilung, Informationen zu dem der Zielabbildung (220) zugeordneten Lichtverteilungs-Algorithmus, insbesondere in Abhängigkeit von Fahrzeugdaten, Scheinwerferdaten und/oder Scheinwerfer-Lichteinstellung, umfassen.

8. Verfahren nach einem der vorangehenden Ansprüche, ferner umfassend ein Erzeugen und Anzeigen von Prüfinformationen (212) für die Echtzeitabbildung (210), wobei Prüfinformationen (212) Informationen zur Ist-Lichtverteilung, insbesondere Geometrie, Blendwert und/oder Beleuchtungsstärke, umfassen.

9. Verfahren nach einem der vorangehenden Ansprüche, ferner umfassend ein Senden eines Diagnoselichtbefehls an das Fahrzeug zum Erzeugen eines Diagnoselichts als Ist-Lichtverteilung des Scheinwerfers (2).

10. Verfahren nach einem der vorangehenden Ansprüche, wobei eine Auswahl des Scheinwerfer-Einstell-Prüfalgorithmus auf Grundlage eines Abgleichs der Echtzeitabbildung (210) und der Vielzahl von Zielabbildungen (220) mittels einer ML-Klassifikation geführt und/oder gestützt wird.

11. Verfahren zum Einstellen und/oder Prüfen eines Scheinwerfers (2) eines Fahrzeugs mithilfe eines Scheinwerfer-Einstell-Prüfgerätes (10), SEP, umfassend die Merkmale nach einem der vorangehenden Ansprüche, und zusätzlich:
Einstellen und/oder Prüfen des Scheinwerfers (2) gemäß dem ausgewählten Scheinwerfer-Einstell-Prüfalgorithmus.

12. Scheinwerfer-Einstell-Prüfgerät (10), SEP, mit einer Kamera (30) und einer Anzeigevorrichtung (40), wobei das SEP (10) konfiguriert ist zum Durchführen des Verfahrens gemäß einem der Ansprüche 1 bis 11.

13. SEP-System (100), umfassend ein Scheinwerfer-Einstell-Prüfgerät (10), SEP, mit einer Kamera (30) und ferner umfassend ein mobiles Endgerät (150) mit einer Anzeigevorrichtung (140), insbesondere ein Smartphone oder ein Tablet, wobei das SEP-System (100) konfiguriert ist zum Durchführen des Verfahrens gemäß einem der Ansprüche 1 bis 11.

14. Computerprogramm, umfassend Befehle, die bewirken, dass die Vorrichtung des Anspruchs 12 oder das System des Anspruchs 13 das Verfahren nach einem der Ansprüche 1 bis 11 ausführt.

15. Computerlesbares Medium, auf dem das Computerprogramm nach Anspruch 14 gespeichert ist.
